# EUROPÄISCHE PATENTSCHRIFT

(11) **EP 1 931 557 B1**
(45) Veröffentlichungstag und Bekanntmachung des Hinweises auf die Patenterteilung: **07.07.2010**
(21) Anmeldenummer: 06793960.3
(22) Anmeldetag: 04.10.2006
(51) Int. Cl.: B62D 65/04, B62D 27/02, B21D 39/03

(54) **AUS MINDESTENS ZWEI VORKONFEKTIONIERTEN BAUGRUPPEN ZUSAMMENGESETZTE FAHRZEUGKAROSSERIE UND VERFAHREN ZU IHRER HERSTELLUNG**
VEHICLE BODY COMPOSED OF AT LEAST TWO PREFABRICATED SUBASSEMBLIES, AND METHOD FOR THE PRODUCTION THEREOF
CARROSSERIE DE VEHICULE COMPOSEE D'AU MOINS DEUX COMPOSANTS PREFABRIQUES ET SON PROCEDE DE PRODUCTION

(30) Priorität: 06.10.2005 DE 102005047927
(43) Veröffentlichungstag der Anmeldung: 18.06.2008
(73) Patentinhaber: ThyssenKrupp Steel Europe AG, 47166 Duisburg (DE)
(72) Erfinder: PATBERG, Lothar, D-47445 Moers (DE); SCHMIDT, Mario, 47441 Moers (DE)
(74) Vertreter: Cohausz & Florack
(86) Internationale Anmeldenummer: PCT/EP2006/067049
(87) Internationale Veröffentlichungsnummer: WO 2007/039630

(56) Entgegenhaltungen:
- EP-A2- 0 953 386
- DE-A1- 10 342 066
- DE-A1- 19 519 353
- GB-A- 2 201 381

## Beschreibung

Die Erfindung betrifft eine Fahrzeugkarosserie, die aus mindestens zwei vorkonfektionierten Baugruppen zusammengesetzt ist, sowie ein Verfahren zur Herstellung einer solchen Fahrzeugkarosserie.

Im Bereich des Karosseriebaus besteht verstärkt die Forderung nach einem möglichst geringen Gewicht bei gleichzeitig optimiertem Verformungsverhalten im Fall eines Unfalls. Das verminderte Karosseriegewicht ermöglicht einen geringen Energieverbrauch für den Antrieb des jeweiligen Fahrzeugs. Durch ein optimiertes Crash-Verhalten sind die Nutzer des Fahrzeugs bei einem Unfall optimal geschützt.

Eine weitere im Hinblick auf eine kostengünstige, wirtschaftliche Herstellung aufgestellte Forderung im Bereich des Automobilbaus besteht darin, dass die einzelnen Baugruppen des herzustellenden Automobils möglichst weitgehend fertig gestellt sein sollen, bevor sie zu dem fertigen Fahrzeug zusammengefügt werden. Durch die separate Vorfertigung ist eine vereinfachte Montage der Einzelteile jeder Baugruppe unter Anwendung optimierter Arbeitsabläufe möglich.

Optimal erfüllen lassen sich die an eine Fahrzeugkarosserie hinsichtlich ihres Gewichtes und ihres Verformungsverhaltens gestellten Anforderungen dadurch, dass Baugruppen aus Leichtmetall- oder Kunststoffelementen mit Baugruppen kombiniert werden, die aus Stahl oder Kunststoff hergestellt sind. Die Auswahl des für das jeweilige Bauelement geeigneten Materials erfolgt dabei in Abhängigkeit von den im praktischen Einsatz auf das betreffende Bauteil wirkenden Belastungen.

Unter Anwendung dieses an sich bekannten Prinzips ist beispielsweise vorgeschlagen worden, bei einem PKW den das Antriebsaggregat und die Vorderachse aufnehmenden Vorderwagen als komplette Baugruppe aus einem Leichtmetallwerkstoff vorzufertigen, während die Fahrgastzelle aus hochfesten Stahlwerkstoffen hergestellt wird. Da sich die unterschiedlichen Materialien in der Regel nicht miteinander verschweißen lassen, werden die aus inkompatiblen Werkstoffen gefertigten Baugruppen üblicherweise miteinander verschraubt, vernietet oder verklebt. Dabei werden diese Verbindungsarten auch kombiniert angewendet, um die erforderliche Festigkeit der Verbindung auch unter den im praktischen Einsatz auftretenden dynamischen Belastungen zu gewährleisten.

Das Dokument DE-A1-103 42 066 offenbart eine Fahrzeugtür, die aus mindestens zwei vorgefertigten Baugruppen zusammengesetzt ist, wobei die Baugruppen in einer Fügezone dadurch miteinander unlösbar verbunden sind, dass ein in der Fügezone auf ein Blech der einen Baugruppe treffender Blechabschnitt der anderen Baugruppe in einem Fügeverfahren, bei dem mindestens einer der Blechabschnitte kalt verformt worden ist, miteinander form- und/oder kraftschlüssig zusammengefügt sind.

Nachteilig ist dabei, dass aufwändige konstruktions- und fertigungstechnische Maßnahmen erforderlich sind, um auf diese Weise ausreichend steife, den heutigen Anforderungen gerecht werdende Karosseriekonstruktionen herstellen zu können. Auch zeigt sich, dass beispielsweise dann, wenn die einzelnen Baugruppen miteinander verklebt werden sollen, erhebliche Mengen an Kleber erforderlich sind, die einerseits den durch die Verwendung leichter Materialien für den Bau der Baugruppen erzielten Gewichtsvorteil mindern und andererseits nur mit gegenüber der konventionellen Fertigung größerem zeitlichen und apparativen Aufwand aufgebracht werden können.

Unabhängig davon, ob die vorgefertigten Baugruppen in bekannter Weise durch Verschweißen, Verschrauben, Vernieten, Verkleben oder in einer anderen der voranstehend erläuterten Weisen miteinander verbunden werden, besteht ein Problem darin, dass dem Grad der Vorfertigung entweder Grenzen durch das jeweils angewendete Fügeverfahren gesetzt sind oder die für das Zusammenfügen der Baugruppen notwendigen Arbeiten so komplex sind, dass die Vorteile der Vorfertigung aufgezehrt werden. So dürfen Baugruppen, die miteinander zu der Gesamtkarosserie verschweißt werden sollen, in den der beim Schweißen entstehenden Hitze ausgesetzten Bereichen nicht mit empfindlichen Bauelementen bestückt oder lackiert sein. Darüber hinaus setzt eine Verbindung von Karosseriebaugruppen durch Verschrauben oder Vernieten ebenso wie das Schweißen oder Kleben eine ausreichende Zugänglichkeit der jeweiligen Montagepunkte voraus.

Ausgehend von dem voranstehend erläuterten Stand der Technik bestand die Aufgabe der Erfindung darin, eine kostengünstig herstellbare Fahrzeugkarosserie zu schaffen, welche problemlos aus vorgefertigten Baugruppen zusammengesetzt werden kann. Darüber hinaus sollte ein Verfahren zum Herstellen einer solchen Fahrzeugkarosserie angegeben werden.

In Bezug auf eine Fahrzeugkarosserie, die aus mindestens zwei vorgefertigten Baugruppen zusammengesetzt ist, ist diese Aufgabe dadurch gelöst worden, dass die Baugruppen in einer Fügezone dadurch miteinander unlösbar verbunden sind, dass ein in der Fügezone auf ein Blech der einen Baugruppe treffender Blechabschnitt der anderen Baugruppe in einem Fügeverfahren, bei dem mindestes einer der Blechabschnitte kalt verformt worden ist, miteinander form- und /oder kraftschlüssig zusammengefügt sind, und dass in mindestens einer der Baugruppen ein sich mindestens abschnittsweise entlang der Fügezone erstreckender, von außen zugänglicher Zugangskanal zum Einführen eines Fügewerkzeugs ausgebildet ist.

In entsprechender Weise ist die oben genannte Aufgabe in Bezug auf ein Verfahren zum Herstellen einer erfindungsgemäß ausgebildeten Fahrzeugkarosserie gemäß der vorliegenden Erfindung dadurch gelöst worden, dass folgende Arbeitsschritte durchlaufen werden:
a) Vorfertigen der Baugruppen (2,3,4) unter Einbeziehung des Ausbildens von in der Fügezone einander zugeordneten Blechabschnitten,
b) Ausrichten der Baugruppen derart, dass die einander zugeordneten Blechabschnitte in der Fügezone aufeinander stoßen,
c) kalt erfolgendes Verformen mindestens eines der aufeinander stoßenden Blechabschnitte derart, dass die Blechabschnitte nach der Kaltverformung form- und kraftschlüssig unlösbar miteinander verbunden sind.

Erfindungsgemäß werden die Baugruppen der Fahrzeugkarosserie, bei der es sich insbesondere um eine PKW-Karosserie handeln kann, zunächst in an sich bekannter Weise vorproduziert. Die vorgefertigten Baugruppen werden dann gemäß der Erfindung durch ein kalt durchgeführtes Fügeverfahren so zusammengefügt, dass sie unlösbar miteinander verbunden sind. Das Zusammenfügen der einzelnen Baugruppen wird dabei als Kaltverformung mindestens eines der aufeinander stoßenden Bleche der Baugruppen durchgeführt. Zusätzliche Verbindungselemente, wie Schrauben, Nieten oder Ähnliches werden dazu nicht benötigt.

Um die erfindungsgemäße Art und Weise des Zusammenfügens der Baugruppen zu einer Gesamtkarosserie einfach und mit geringem fertigungstechnischen Aufwand durchführen zu können, sind die einzelnen Baugruppen einer erfindungsgemäßen Fahrzeugkarosserie so ausgebildet, dass sie gegebenenfalls einzeln oder gemeinsam im zusammengesetzten Zustand im Bereich der Fügezonen Kanäle bilden, über die ein für die Kaltverformung benötigtes Werkzeug in der Fügezone bewegt werden kann.

Indem die Erfindung einerseits vorschlägt, die einzelnen vorgefertigten Baugruppen einer erfindungsgemäßen Fahrzeugkarosserie durch eine kalt erfolgende Verformung miteinander zu verbinden, und andererseits die Fahrzeugkarosserie so auslegt, dass eine vereinfachte Zugänglichkeit der Fahrzeugkarosserie genau in den Bereichen gewährleistet ist, in dem die kalt erfolgende Verformung vorgenommen werden muss, steht ein Verbindungskonzept zur Verfügung, das es auf einfach durchführbare Weise ermöglicht, auch in einem hohen Grad vorgefertigte und mit komplexen, empfindlichen Bauteilen bestückte Baugruppen sicher zu einer Fahrzeugkarosserie zu verbinden. So können auf erfindungsgemäße Weise auch fertig lackierte und voll ausgestattete Baugruppen zu einer erfindungsgemäßen Fahrzeugkarosse zusammengefügt werden.

Gemäß einer im Hinblick auf die praktische Umsetzung der Erfindung besonders günstigen Ausgestaltung der Erfindung ist vorgesehen, dass die Fügezone und der sich entlang von ihr erstreckende Zugangskanal geradlinig ausgebildet sind. Eine derart geradlinige Ausgestaltung macht es besonders einfach, die für die Kaltverformung benötigten Werkzeuge in den Bereich der Fügezone zu bewegen.

Die Vorteile schlagen der Erfindung sich bereits bei der Herstellung von Karosserien nieder, die aus Werkstoffen einer einzigen Werkstoffklasse hergestellt sind. So wirkt sich die erfindungsgemäße Art und Weise des Fügens von vorgefertigten Baugruppen zu einer Karosserie auch dann schon besonders positiv aus, wenn fertig vormontierte und bestückte Baugruppen aus Stahl zu einer insgesamt aus Stahlwerkstoffen bestehenden Fahrzeugkarosserie zusammengefügt werden sollen. Darüber hinausgehend eignet sich die Erfindung jedoch insbesondere auch für solche Anwendungen, bei denen die erste Baugruppe der Fahrzeugkarosserie mindestens in ihrem mit der zweiten Baugruppe unmittelbar in Kontakt kommenden Abschnitt aus einem Werkstoff besteht, der einer anderen Werkstoffklasse angehört als der Werkstoff des Abschnitts der zweiten Baugruppe, mit dem er in Kontakt kommt. So lassen sich auf erfindungsgemäße Weise problemlos Baugruppen aus Kunststoffmaterial, Leichtmetall und Stahl untereinander verbinden.

Eine besonders praxisgerechte, für die großtechnische Umsetzung besonders geeignete Ausgestaltung der Erfindung ist dadurch gekennzeichnet, dass die form- und kraftschlüssige Verbindung zwischen den Blechabschnitten dadurch gebildet ist, dass ein Randabschnitt der ersten Baugruppe in eine in die zweite Baugruppe eingeformte Befestigungsnut gestellt und durch seitlich an den in der Befestigungsnut gestellten Randabschnitt der ersten Baugruppe angedrücktes Material der zweiten Baugruppe form- und/oder kraftschlüssig in der Befestigungsnut gehalten ist.

Eine zur Herstellung dieser Variante einer erfindungsgemäßen Karosserie besonders geeignete Ausgestaltung des erfindungsgemäßen Verfahrens ist dadurch gekennzeichnet, dass der Arbeitsschritt a) das Ausbilden einer Befestigungsnut an einem Blechabschnitt der einen Baugruppe und eines streifenartig frei vorstehenden Randabschnitts an der anderen Baugruppe umfasst, dessen Verlauf an den Verlauf und die Form der Befestigungsnut angepasst ist, dass der Arbeitsschritt b) das Einsetzen des Randabschnitts der ersten Baugruppe in die Befestigungsnut der zweiten Baugruppe umfasst, und dass der Arbeitsschritt c) das Anpressen von seitlich an die Befestigungsnut angrenzendem Material der zweiten Baugruppe an den in der Befestigungsnut stehenden Randabschnitt der ersten Baugruppe umfasst, so dass die beiden Baugruppen mindestens über bestimmte Längenabschnitte der Befestigungsnut kraft- und/oder formschlüssig unlösbar miteinander verbunden sind.

Gemäß dieser Ausgestaltung der Erfindung wird das aus der EP 0 868 237 B1 bereits bekannte Verfahren zur Erzeugung von Metallprofilen nun auch für die Verbindung der vorgefertigten Baugruppen zu einer Fahrzeugkarosserie genutzt. Dieses bekannte Verfahren sieht vor, die mindestens zwei Teile eines Metallprofils ausschließlich durch Klemmkraft miteinander zu verbinden. Die Herstellung der bekannten Metallprofile erfolgt dabei in der Weise, dass zunächst in eines der zu fügenden Teile eine Nut eingeformt wird. Bei dieser Einformung findet eine Gefügeveränderung in der näheren Umgebung der Nut statt. Dann wird in diese Nut ein anderes aus Flachmaterial bestehendes Teil mit seiner Schmalseite eingesetzt und in der Nut durch Verquetschen des der Nut benachbarten Materials in dem ersten Teil festgeklemmt. Dabei findet eine weitere Gefügeveränderung statt, so dass eine ausschließlich kraft- und formschlüssige Verbindung zwischen den beiden aneinander anzuschließenden Teilen hergestellt ist. Auf diese Weise lassen sich Teile aus beliebigen Metallen fügen, für die andere Fügetechniken, sei es aus Gründen der Materialkombination, sei es aus anderen Gründen, nicht geeignet oder optimal sind.

Aufgrund der an die Kaltverformbarkeit der Fügepartner gestellten Anforderungen eignen sich für die Anwendung der voranstehend angegebenen Variante der Erfindung insbesondere solche Fahrzeugkarossen, bei denen mindestens der Abschnitt der zweiten Baugruppe, in den die Befestigungsnut eingeformt ist, aus einem Metallwerkstoff besteht. Aufgrund ihrer guten Verformbarkeit sind Stahlwerkstoffe für diesen Zweck besonders geeignet. Ebenso können jedoch auch Leichtmetallwerkstoffe, wie Magnesium- oder Aluminium-Werkstoffe, als Baumaterial für die zweite, mit der Befestigungsnut versehenen Baugruppe verwendet werden, wenn dies die auf die jeweilige Baugruppe im praktischen Einsatz wirkenden Kräfte erlauben.

Abhängig von den jeweiligen örtlichen Gegebenheiten lässt sich die erfindungsgemäß genutzte Art der Verbindung der Baugruppen dann besonders einfach herstellen, wenn der in die Befestigungsnut gestellte Randabschnitt der ersten Baugruppe im Wesentlichen senkrecht zur Oberfläche des Abschnitts der zweiten Baugruppe ausgerichtet ist, in den die Befestigungsnut eingeformt ist.

Sofern die Baugruppen nach dem Zusammenfügen im Verbindungsbereich ein Hohlprofil bilden, das durch mindestens zwei gegenüberliegende Wände seitlich begrenzt ist, von denen jeweils ein Teil der zweiten Baugruppe zugeordnet ist, ist es aus fertigungstechnischer Sicht günstig, wenn der eine Teil der Wand einen abgekröpften Randabschnitt aufweist, in dessen der ersten Baugruppe zugeordneten Oberfläche die Befestigungsnut eingeformt ist, während der jeweils andere Teil der Wände der ersten Baugruppe zugeordnet ist und mit seinem Randabschnitt in der Befestigungsnut gehalten ist. Bei dieser Ausgestaltung weisen die einzelnen miteinander zu verbindenden Baugruppen vor dem Zusammenfügen im Verbindungsbereich offene Profilabschnitte auf, in die das zum Aufbringen der erforderlichen Anpresskräfte eingesetzte Werkzeug problemlos eingeführt werden kann.

Ein solches Werkzeug kann beispielsweise so ausgeführt werden, dass beim Arbeitsschritt c) die für das Anpressen des Materials der zweiten Baugruppe an den Randabschnitt der ersten Baugruppe erforderlichen Kräfte mittels zweier längs der Befestigungsnut bewegter Anpressrollen aufgebracht werden, von denen jeweils eine auf einer der Seiten der Befestigungsnut und mit geringem Abstand zu dieser geführt wird.

Alternativ zu der voranstehend erläuterten, der aus der EP 0 868 237 B1 bekannten Möglichkeit der Verbindung von zwei Blechteilen nutzenden Variante des erfindungsgemäßen Verfahren ist es auch denkbar, die kalt erfolgende Umformung der aufeinander stoßenden Blechabschnitte als Umbördeln auszuführen.

Nachfolgend wird die Erfindung anhand einer ein Ausführungsbeispiel darstellenden Zeichnung näher erläutert. Es zeigen jeweils schematisch:

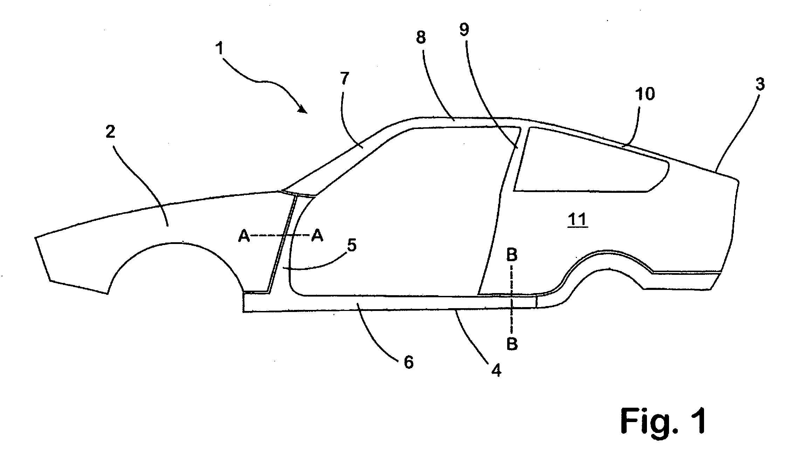

- Fig. 1: eine Fahrzeugkarosserie für einen PKW in seitlicher Ansicht;
- Fig. 2: einen Schnitt entlang der in Fig. 1 eingetragenen Schnittlinie A-A;
- Fig. 3: einen Schnitt entlang der in Fig. 1 eingetragenen Schnittlinie B-B.

Die Fahrzeugkarosserie 1 ist aus drei Baugruppen 2,3,4 zusammengesetzt, von denen die Baugruppe 2 den Vorderwagen, die Baugruppe 3 ein Seitenteil und die Baugruppe 4 die Bodengruppe einschließlich der A-Säule 5 und der Außenschweller 6 der Fahrzeugkarosserie bilden. Bei fertig montiertem Fahrzeug trägt die den Vorderwagen bildende Baugruppe 2 den gesamten Antriebsstrang des Fahrzeugs, während aus der Baugruppe 3 (Seitenteil) und der Baugruppe 4 (Bodengruppe), einer hier nicht gezeigten das Dach der Fahrzeugkarosserie 1 bildenden Baugruppe und einer weiteren hier ebenfalls nicht sichtbaren Seitenteilbaugruppe die Fahrgastzelle der Fahrzeugkarosserie 1 zusammengesetzt wird.

Um ein möglichst geringes Gewicht zu erreichen, ist die Baugruppe 2 aus hier im Einzelnen nicht dargestellten Blechteilen zusammengesetzt worden, die jeweils aus einem Aluminium-Werkstoff hergestellt sind. Die Verbindung der Blechteile der ersten Baugruppe 2 untereinander erfolgte in konventioneller Weise durch Schweißen. Die Gesamtkonstruktion der Baugruppe 2 ist dabei so ausgelegt worden, dass sie in der Lage ist, die im Betrieb auftretenden Belastungen mit ausreichender Steifigkeit aufzunehmen und gleichzeitig ein optimiertes Energieaufnahmevermögen bei einem Unfall aufweist.

Die die Bodengruppe der Fahrzeugkarosserie 1 bildende Baugruppe 4 ist dagegen aus einem hochfesten Leichtbau-Stahlwerkstoff gefertigt, der aufgrund seiner Festigkeit und Formgebung sicherstellt, dass die Fahrgastzelle der Fahrzeugkarosserie 1 die Insassen auch bei einem Unfall optimal schützt und im normalen Betrieb eine hohe Gesamtsteifigkeit der Fahrzeugkarosserie 1 gewährleistet.

Die das Seitenteil bildende Baugruppe 3 ist aus einem Grundgerüst, das aus miteinander verschweißten Stahlblechen zusammengesetzt ist und unter anderem die vordere, an die A-Säule 5 der Baugruppe 4 angeschlossene Dachsäule 7, den Dachträger 8, die B-Säule 9 und die C-Säule 10 der Fahrzeugkarosserie 1 umfasst, und Kunststoff-Flächenelementen 11 hergestellt, die die vom Grundgerüst umschlossenen Seitenflächen der Baugruppe 3 füllen.

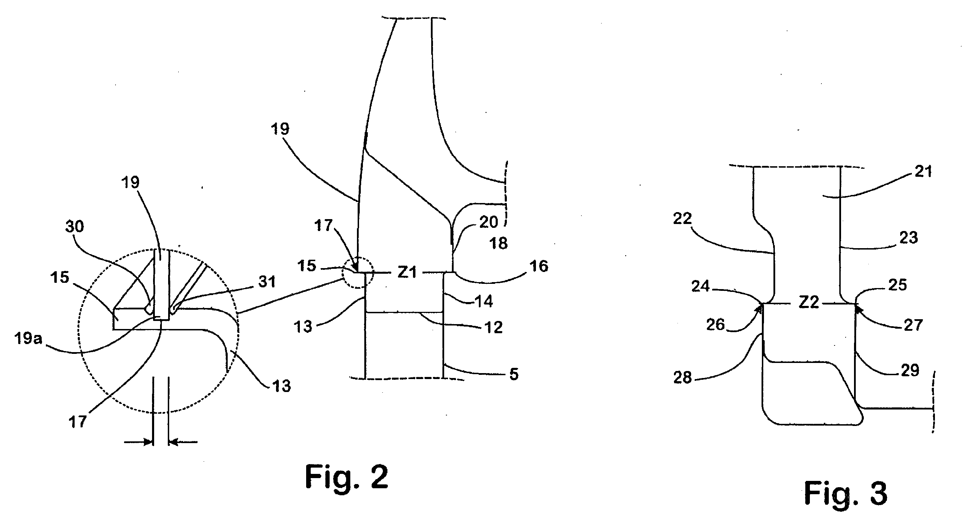

Die Baugruppe 2 und die Baugruppe 4 sind unter anderem im Bereich der A-Säule 5 der Baugruppe 4 kraft- und formschlüssig miteinander verbunden (Fig. 2). Zu diesem Zweck ist die A-Säule 5 aus einem nach Art eines U-Profils geformten Stahlblechteil 12 gebildet, dessen Schenkel 13,14 in Richtung der Baugruppe 2 gerichtet sind. An den freien Enden der Schenkel 13,14 sind jeweils rechtwinklig von den Schenkeln 13,14 nach außen weisende schmale Abschnitte 15,16 abgekröpft, in deren der Baugruppe 2 zugeordneten Oberfläche jeweils eine sich längs der Schenkel 13,14 erstreckende Befestigungsnut 17,18 eingeformt ist.

An der Baugruppe 2 sind in dem an die Baugruppe 4 angeschlossenen Bereich jeweils Wandabschnitte 19,20 ausgebildet, die in Richtung des Stahlblechteils 12 der Baugruppe 4 vorstehen und derart angeordnet und ausgerichtet sind, dass nach dem Zusammenfügen der Baugruppen 2,4 jeweils ein Wandabschnitt 19,20 mit seinem freien Randbereich 19a in einer der Befestigungsnuten 17 bzw. 18 steht. Im zum Fügen ausgerichteten Zustand schließen die auf die Schenkel 13,14 der Baugruppe 2 stoßenden Wandabschnitte 19,20 der Baugruppe 4 mit den Schenkeln 13,14 im Bereich der durch die Befestigungsnuten 17,18 näher bestimmten Fügezone einen von außen frei zugänglichen Zugangskanal Z1 ein, durch den das für die anschließend kalt erfolgende Umformoperation benötigte, hier nicht dargestellte Werkzeug längs der Befestigungsnuten 17,18 geführt werden kann. Nach dem Verpressen des an die Befestigungsnuten 17,18 angrenzenden Materials mit Hilfe dieses Werkzeugs ist der jeweils in die betreffende Befestigungsnut 17,18 eingestellte Wandabschnitt 19,20 dort form- und kraftschlüssig unlösbar gehalten. Nach dem Umformen und dem Herausführen des Werkzeugs kann die Öffnung des Zugangskanals Z1 mittels einer Kappe verschlossen werden.

Um die Baugruppe 4 mit der Baugruppe 3 im Bereich des Außenschwellers 6 zu verbinden, ist das zum Grundgerüst der Baugruppe 3 gehörende, unmittelbar an den Außenschweller 6 angeschlossene Stahlblechelement 21 als in Richtung des Außenschwellers 6 geöffnetes U-Profil geformt. An den freien Schenkeln 22,23 dieses Stahlblechelements 21 sind wie bei der A-Säule 5 nach außen weisende schmale Abschnitte 24,25 abgekröpft, in die jeweils eine Befestigungsnut 26,27 eingeformt ist, durch die eine weitere Fügezone definiert ist.

Der Außenschweller 6 weist in diesem Bereich in Richtung der Baugruppe 3 frei vorstehende Wandabschnitte 28,29 auf, die derart angeordnet und ausgerichtet sind, dass nach dem Zusammenfügen der Baugruppen 3,4 jeweils ein Wandabschnitt 28,29 mit seinem freien Randbereich in einer der Befestigungsnuten 26 bzw. 27 des Stahlblechelements 21 der Baugruppe 3 steht. Auch die Wandabschnitte 28,29 des Außenschwellers 6 und auf sie stoßenden freien Schenkel 22,23 des Stahlblechelements 21 schließen im für das Zusammenfügen ausgerichteten Zustand einen von außen zugänglichen Zugangskanal Z2 ein, in den wiederum das für das Verpressen des an die Befestigungsnuten 26,27 angrenzenden Materials benötigte Werkzeug eingeführt werden kann. Nach dem mit Hilfe dieses Werkzeug erfolgten Verpressen sind die Wandabschnitte 28,29 und die freien Schenkel 22,23 form- und kraftschlüssig unlösbar aneinander gehalten.

Die Art und Weise, wie die Verbindung zwischen den Baugruppen 2,3 und 4 hergestellt wird, wird hier anhand der vergrößerten Ausschnittsdarstellung in der Fig. 2 für die Verbindung zwischen der Baugruppe 2 und der Baugruppe 4 im Bereich der Befestigungsnut 17 exemplarisch erläutert. Die Verbindungen im Bereich der Befestigungsnuten 18, 26 und 27 sind in entsprechender Weise hergestellt.

Bereits bei der Vorfertigung des Stahlblechelements 5 der Baugruppe 4 ist in die der Baugruppe 2 zugeordneten Oberflächen des abgekröpften Abschnitts 15 die Befestigungsnut 17 eingeformt worden. Die Breite der Befestigungsnut 17 entsprach dabei der Dicke D des Randbereichs 19a der Wand 19 der Baugruppe 2, der die Befestigungsnut 17 zugeordnet ist.

Zum form- und kraftschlüssigen unlösbaren Verbinden der Wand 19 der Baugruppe 2 mit dem Stahlblechelement 21 der Baugruppe 4 ist nach dem Zusammenfügen der Baugruppen 2,4 das beidseits seitlich der Befestigungsnut 17 vorhandene Material des Abschnitts 15 mittels eines Werkzeugs in der aus der EP 0 868 237 B1 an sich bekannten Weise gegen den in der Befestigungsnut 17 stehenden Randabschnitt 19a der Wand 19 gedrückt worden. Die in Folge der Materialverdrängung beidseits der Befestigungsnut 17 entstandenen Rillen 30,31 sind in Fig. 2 zur Verdeutlichung in einer nicht realistischen, übergroßen Weise dargestellt.

### BEZUGSZEICHEN

- 1: Fahrzeugkarosserie
- 2,3,4: Baugruppen
- 5: A-Säule
- 6: Schweller
- 7: vordere Dachsäule der Fahrzeugkarosserie 1
- 8: Dachträger der Fahrzeugkarosserie 1
- 9: B-Säule der Fahrzeugkarosserie 1
- 10: C-Säule 10 der Fahrzeugkarosserie 1
- 11: Kunststoff-Flächenelement
- 12: Stahlblechteil
- 13,14: Schenkel des Stahlblechteils 12
- 15,16: abgekröpfte Abschnitte
- 17,18: Befestigungsnuten
- 19,20: Wandabschnitte
- 19a: freier Randbereich 19a des Wandabschnitts 19
- 21: Stahlblechelement
- 22,23: Schenkel des Stahlblechelements
- 24,25: abgekröpfte Abschnitte
- 26,27: Befestigungsnut
- 28,29: Wandabschnitte
- 30,31: Rillen
- Z1,Z2: Zuführkanäle

## Patentansprüche

1. Fahrzeugkarosserie, die aus mindestens zwei vorgefertigten Baugruppen (2,3,4) zusammengesetzt ist, wobei die Baugruppen (2,3,4) in einer Fügezone **dadurch** miteinander unlösbar verbunden sind, dass ein in der Fügezone auf ein Blech (13,14;19,20; 22,23;28,29) der einen Baugruppe (2,3,4) treffender Blechabschnitt (13,14;19,20; 22,23;28,29) der anderen Baugruppe (2,3,4) in einem Fügeverfahren, bei dem mindestens einer der Blechabschnitte (13,14;19,20; 22,23;28,29) kalt verformt worden ist, miteinander form- und/oder kraftschlüssig zusammengefügt sind, **dadurch gekennzeichnet, dass** in mindestens einer der Baugruppen ein sich mindestens abschnittsweise entlang der Fügezone erstreckender, von außen zugänglicher Zugangskanal (Z1,Z2) zum Einführen eines Fügewerkzeugs ausgebildet ist.

2. Fahrzeugkarosserie nach Anspruch 1, **dadurch gekennzeichnet, dass** die Fügezone und der sich entlang von ihr erstreckende Zugangskanal (Z1,Z2) geradlinig ausgebildet sind.

3. Fahrzeugkarosserie nach einem der voranstehenden Ansprüche, **dadurch gekennzeichnet, dass** die erste Baugruppe (2,3,4) mindestens in ihrem mit der zweiten Baugruppe (2,3,4) unmittelbar in Kontakt kommenden Abschnitt (19a) aus einem Werkstoff besteht, der einer anderen Werkstoffklasse angehört als der Werkstoff des Abschnitts (15,16,24,25) der zweiten Baugruppe (2,3,4), mit dem er in Kontakt kommt.

4. Fahrzeugkarosserie nach Anspruch 3, **dadurch gekennzeichnet, dass** die erste Baugruppe (2) aus einem Leichtmetallwerkstoff besteht.

5. Fahrzeugkarosserie nach Anspruch 3, **dadurch gekennzeichnet, dass** die erste Baugruppe (3) aus einem Kunststoffmaterial besteht.

6. Fahrzeugkarosserie nach einem der Ansprüche 3 bis 5, **dadurch gekennzeichnet, dass** die zweite Baugruppe (4) jeweils aus einem Stahlwerkstoff hergestellt ist.

7. Fahrzeugkarosserie nach einem der voranstehenden Ansprüche, **dadurch gekennzeichnet, dass** die form- und kraftschlüssige Verbindung zwischen den Blechabschnitten **dadurch** gebildet ist, dass ein Randabschnitt (19a) der ersten Baugruppe (2,3,4) in eine in die zweite Baugruppe (2,3,4) eingeformte Befestigungsnut (17,18,26,27) gestellt und durch seitlich an den in der Befestigungsnut (17,18,26,27) gestellten Randabschnitt (19a) der ersten Baugruppe (2,3,4) angedrücktes Material der zweiten Baugruppe (2,3,4) form- und/oder kraftschlüssig in der Befestigungsnut (17,18,26,27) gehalten ist.

8. Fahrzeugkarosserie nach Anspruch 7, **dadurch gekennzeichnet, dass** mindestens der Abschnitt (15,16,24,25) der zweiten Baugruppe (2,3,4), in den die Befestigungsnut (17,18,26,27) eingeformt ist, aus einem Metallwerkstoff besteht.

9. Fahrzeugkarosserie nach Anspruch 8, **dadurch gekennzeichnet, dass** der Metallwerkstoff ein Stahlwerkstoff ist.

10. Fahrzeugkarosserie nach einem der Ansprüche 7 bis 9, **dadurch gekennzeichnet, dass** der in die Befestigungsnut (17,18,26,27) gestellte Randabschnitt (19a) der ersten Baugruppe (2,3,4) im Wesentlichen senkrecht zur Oberfläche des Abschnitts (15,16,24,25) der zweiten Baugruppe (2,3,4) ausgerichtet ist, in den die Befestigungsnut (17,18,26,27) eingeformt ist.

11. Fahrzeugkarosserie nach einem der Ansprüche 7 bis 10, **dadurch gekennzeichnet, dass** die Baugruppen (2,3,4) nach dem Zusammenfügen im Bereich der Fügezone ein den Zugangskanal darstellendes Hohlprofil bilden, das durch mindestens zwei gegenüberliegende Wände (13,14,19,20; 22,23,28,29) seitlich begrenzt ist, von denen jeweils ein Teil (13,14; 22,23) der zweiten Baugruppe (3,4) zugeordnet ist und einen abgekröpften Randabschnitt (15,16,24,25) aufweist, in dessen der ersten Baugruppe (2,3,4) zugeordneten Oberfläche die Befestigungsnut (17,18,26,27) eingeformt ist, während der jeweils andere Teil der Wände (19,20;28,29) der ersten Baugruppe (2,4) zugeordnet ist und mit seinem Randabschnitt (19a) in der Befestigungsnut (17,18,26,27) gehalten ist.

12. Verfahren zum Herstellen einer gemäß einem der Ansprüche 1 bis 11 ausgebildeten Fahrzeugkarosserie, **gekennzeichnet durch** folgende Arbeitsschritte:
a) Vorfertigen der Baugruppen (2,3,4) unter Einbeziehung des Ausbildens von in der Fügezone einander zugeordneten Blechabschnitten (13,14;19,20; 22,23;28,29),
b) Ausrichten der Baugruppen (2,3,4) derart, dass die einander zugeordneten Blechabschnitte (13,14;19,20; 22,23;28,29) in der Fügezone aufeinander stoßen,
c) kalt erfolgendes Verformen mindestens eines der aufeinander stoßenden Blechabschnitte (13,14;19,20; 22,23;28,29), wobei dieses kalt erfolgende Verformen in einer in einem von außen frei zugänglichen Zugangskanal (Z1) gebildeten Fügezone derart erfolgt, dass die Blechabschnitte (13,14;19,20; 22,23;28,29) nach der Kaltverformung form- und/oder kraftschlüssig unlösbar miteinander verbunden sind.

13. Verfahren nach Anspruch 12, **dadurch gekennzeichnet,**
- **dass** der Arbeitsschritt a) das Ausbilden einer Befestigungsnut (17,18,26,27) an einem Blechabschnitt der einen Baugruppe (2,3,4) und eines streifenartig frei vorstehenden Randabschnitts (19a) an der anderen Baugruppe (2,3,4) umfasst, dessen Verlauf an den Verlauf und die Form der Befestigungsnut (17,18,26,27) angepasst ist,
- **dass** der Arbeitsschritt b) das Einsetzen des Randabschnitts (19a) der ersten Baugruppe (2,3,4) in die Befestigungsnut (17,18,26,27) der zweiten Baugruppe (2,3,4) umfasst, und
- **dass** der Arbeitsschritt c) das Anpressen von seitlich an die Befestigungsnut (17,18,26,27) angrenzendem Material der zweiten Baugruppe (2,3,4) an den in der Befestigungsnut (17,18,26,27) stehenden Randabschnitt (19a) der ersten Baugruppe (2,3,4) umfasst, so dass die beiden Baugruppen (2,3,4) mindestens über bestimmte Längenabschnitte der Befestigungsnut (17,18,26,27) kraft- und/oder formschlüssig unlösbar miteinander verbunden sind.

14. Verfahren nach Anspruch 13, **dadurch gekennzeichnet, dass** beim Arbeitsschritt c) die für das Anpressen des Materials der zweiten Baugruppe (2,3,4) an den Randabschnitt der ersten Baugruppe (2,3,4) erforderlichen Kräfte mittels zweier längs der Befestigungsnut (17,18,26,27) bewegter Anpressrollen aufgebracht werden, von denen jeweils eine auf einer der Seiten der Befestigungsnut (17,18,26,27) und mit geringem Abstand zu dieser geführt wird.

15. Verfahren nach Anspruch 12, **dadurch gekennzeichnet, dass** im Arbeitschritt c) das kalt erfolgende Verformen als Umbördeln ausgeführt wird.

## Claims

1. Motor vehicle body, which is composed of at least two prefabricated modules (2, 3, 4), wherein the modules (2, 3, 4) are connected to one another in a non-detachable manner in a joint zone, such that a sheet (13, 14; 19, 20; 22, 23; 28, 29) of the one module (2, 3, 4) coming into contact in the joint zone on a sheet section (13, 14; 19, 20; 22, 23; 28, 29) of the other module (2, 3, 4) are joined to one another in a joining process, in which at least one of the sheet sections (13, 14; 19, 20; 22, 23; 28, 29) has been cold-formed, with positive and/or non-positive fit, **characterised in that** in at least one of the modules an access channel (Z1, Z2) is formed, extending at least in sections along the joint zone and accessible from outside for introduction of a joining tool.

2. Motor vehicle body according to Claim 1, **characterised in that** the joint zone and the access channel (Z1, Z2) extending along it are designed as a straight line.

3. Motor vehicle body according to any one of the preceding claims, **characterised in that** the first module (2, 3, 4) consists, at least in its section (19a) coming directly into contact with the second module (2, 3, 4), of a material which belongs to another material class than the material of the section (15, 16, 24, 25) of the second module (2, 3, 4) with which it comes into contact.

4. Motor vehicle body according to Claim 3, **characterised in that** the first module (2) consists of a lightweight metal material.

5. Motor vehicle body according to Claim 3, **characterised in that** the first module (3) consists of a plastic material.

6. Motor vehicle body according to any one of Claims 3 to 5, **characterised in that** the second module (4) is manufactured in each case from a steel material.

7. Motor vehicle body according to any one of the preceding claims, **characterised in that** the positive and non-positive connection between the sheet sections is formed in such a way that a peripheral section (19a) of the first module (2, 3, 4) is placed in a securing slot (17, 18, 26, 27) formed into the second module (2, 3, 4) and is held in the securing slot (17, 18, 26, 27) in positive and/or non-positive fit by means of material of the second module (2, 3, 4) pressed laterally onto the peripheral section (19a) of the first module (2, 3, 4) placed in the securing slot (17, 18, 26, 27).

8. Motor vehicle body according to Claim 7, **characterised in that** at least the section (15, 16, 24, 25) of the second module (2, 3, 4), into which the securing slot (17, 18, 26, 27) is formed, consists of a metal material.

9. Motor vehicle body according to Claim 8, **characterised in that** the metal material is a steel material.

10. Motor vehicle body according to any one of Claims 7 to 9, **characterised in that** the peripheral section (19a) of the first module (2, 3, 4) placed in the securing slot (17, 18, 26, 27) is aligned essentially perpendicular to the surface of the section (15, 16, 24, 25) of the second module (2, 3, 4), into which the securing slot (17, 18, 26, 27) is formed.

11. Motor vehicle body according to any one of Claims 7 to 10, **characterised in that** the modules (2, 3, 4), after joining in the area of the joint zone, form a hollow profile representing the access channel, which is delimited at the sides by at least two mutually opposing walls (13, 14, 19, 20; 22, 23, 28, 29), of which in each case a part (13, 14; 22, 23) is allocated to the second module (3, 4) and has a cropped peripheral section (15, 16, 24, 25), in the surface of which, allocated to the first module (2, 3, 4), the securing slot (17, 18, 26, 27) is formed, while the other part of the walls (19, 20; 28, 29) in each case is allocated to the first module (2, 4) and is held by its peripheral section (19a) in the securing slot (17, 18, 26, 27).

12. Method for manufacturing a motor vehicle body formed according to any one of Claims 1 to 11, **characterised by** the following production steps:
a) Prefabrication of the modules (2, 3, 4) including formation of sheet sections (13, 14; 19, 20; 22, 23; 28, 29) allocated to one another in the joint zone,
b) Alignment of the modules (2, 3, 4) in such a way that the sheet sections (13, 14; 19, 20; 22, 23; 28, 29) allocated to one another abut on one another in the joint zone,
c) Cold-forming of at least one of the sheet sections (13, 14; 19, 20; 22, 23; 28, 29) abutting on one another, in which this cold-forming takes place in a joining zone formed in an access channel (21) freely accessible from outside, in such a way that the sheet sections (13, 14; 19, 20; 22, 23; 28, 29) are connected to one another after cold-forming in a non-detachable manner in positive and/or non-positive fit.

13. Method according to Claim 12, **characterised in that**:
- the production step a) comprises the formation of a securing slot (17, 18, 26, 27) on a sheet section of the one module (2, 3, 4) and a strip-like freely projecting peripheral section (19a) on the other module (2, 3, 4), the course of which is adapted to the course and shape of the securing slot (17, 18, 26, 27),
- the production step b) comprises the insertion of the peripheral section (19a) of the first module (2, 3, 4) into the securing slot (17, 18, 26, 27) of the second module (2, 3, 4), and
- the production step c) comprises the pressing of material of the second module (2, 3, 4), laterally adjacent to the securing slot (17, 18, 26, 27) against the peripheral section (19a) of the first module (2, 3, 4) located in the securing slot (17, 18, 26, 27), such that the two modules (2, 3, 4) are connected to one another in a non-detachable manner in non-positive and/or positive fit at least over specific longitudinal sections of the securing slot (17, 18, 26, 27).

14. Method according to Claim 13, **characterised in that** with production step c) the forces required for pressing the material of the second module (2, 3, 4) against the peripheral section of the first module (2, 3, 4) are applied by means of two pressure rollers moved along the securing slot (17, 18, 26, 27), one of which in each case is guided on one of the sides of the securing slot (17, 18, 26, 27) and at a short distance from it.

15. Method according to Claim 12, **characterised in that** in production step c) the cold-forming process is carried out as a peripheral flanging process.

## Revendications

1. Carrosserie de véhicule automobile, qui est composée d'au moins deux ensembles préfabriqués (2, 3, 4), les ensembles (2, 3, 4) étant reliés ensemble inséparablement, dans une zone de joint, du fait qu'une section de tôle (13, 14 : 19, 20 ; 22, 23 ; 28, 29) d'un ensemble (2, 3, 4) et une section de tôle (13, 14 ; 19, 20 ; 22, 23 ; 28, 29) d'un autre ensemble (2, 3, 4), sont reliées ensemble par emboîtement et / ou par adhérence par un procédé d'assemblage, au cours duquel au moins l'une des section de tôle (13, 14 ; 19, 20 ; 22, 23 ; 28, 29) a été déformée, **caractérisée en ce qu'**un canal d'accès (Z1, Z2) accessible de l'extérieur, qui s'étend, au moins par sections, le long de la zone de joint, est formé, dans au moins l'un des ensembles, pour l'introduction d'un outil de jointure.

2. Carrosserie de véhicule automobile selon la revendication 1, **caractérisée en ce que** la zone de joint et le canal d'accès (Z1, Z2), qui s'étend le long d'elle, sont en ligne droite.

3. Carrosserie de véhicule automobile selon l'une des revendications précédentes, **caractérisée en ce que** le premier ensemble (2, 3, 4) consiste, au moins dans sa section marginale (19a), qui entre en contact direct avec le deuxième ensemble (2, 3, 4), en un matériau, qui appartient à une autre classe de matériaux que le matériau de la section (15, 16, 24, 25) du deuxième ensemble (2, 3, 4) avec lequel il entre en contact.

4. Carrosserie de véhicule automobile selon la revendication 3, **caractérisée en ce** le premier ensemble (3) est fabriqué en métal léger.

5. Carrosserie de véhicule automobile selon la revendication 3, **caractérisée en ce que** le premier ensemble (3) est fabriqué en matière synthétique.

6. Carrosserie de véhicule automobile selon l'une des revendications 3 à 5, **caractérisée en ce que** le deuxième ensemble (4) est fabriqué en acier.

7. Carrosserie de véhicule automobile selon l'une des revendications 1 à 6, **caractérisée en ce que** la liaison par emboîtement et par adhérence entre les sections de tôle est réalisée **en ce qu'**une section marginale (19a) du premier ensemble (2, 3, 4) est insérée dans une rainure de fixation (17, 18, 26, 27) formée dans le deuxième ensemble (2, 3, 4), et est maintenue par emboîtement et /ou par adhérence dans la rainure de fixation (17, 18, 26, 27) par le matériau du deuxième ensemble (2, 3, 4), qui est pressé latéralement contre la section marginale (19a) du premier ensemble (2, 3, 4), insérée dans la rainure de fixation (17, 18, 26, 27).

8. Carrosserie de véhicule automobile selon la revendication 7, **caractérisée en ce qu'**au moins la section (15, 16, 24, 25) du deuxième ensemble (2, 3, 4), dans laquelle la rainure de fixation (17, 18, 26, 27) est formée, est en matériau métallique.

9. Carrosserie de véhicule automobile selon la revendication 8, **caractérisée en ce** le matériau métallique est de l'acier.

10. Carrosserie de véhicule automobile selon l'une des revendications 7 à 9, **caractérisée en ce que** la section marginale (19a) du premier ensemble (2, 3, 4), insérée dans la rainure de fixation (17, 18, 26, 27), est orientée essentiellement perpendiculairement à la surface de la section (15, 16, 24, 25) du deuxième ensemble (2, 3, 4), dans laquelle est formée la rainure de fixation (17, 18, 26, 27).

11. Carrosserie de véhicule automobile selon l'une des revendications 7 à 10, **caractérisée en ce que** les ensembles (2, 3, 4), après avoir été assemblés dans la zone de joint, forment un profilé creux, représentant le canal d'accès, qui est limité latéralement par au moins deux parois opposées (13, 14, 19, 20 ; 22, 23, 28, 29), dont une partie respective (13, 14 ; 22, 23) est associée au deuxième ensemble (3, 4) et présente une section marginale coudée (15, 16, 24, 25), dans la surface associée au premier ensemble (2, 3, 4) de laquelle est formée la rainure de fixation (17, 18, 26, 27), tandis que l'autre partie des parois (19, 20 ; 28, 29) est associée au premier ensemble (2, 4) et est maintenue, par sa section marginale (19a), dans la rainure de fixation (17, 18, 26, 27).

12. Procédé de fabrication d'une carrosserie de véhicule automobile, qui est réalisée selon l'une des revendications 1 à 11, **caractérisé par** les phases de travail suivantes :
a) Préfabrication des ensembles (2, 3, 4), compte tenu du formage des sections de tôle (13, 14 ; 19, 20 ; 22, 23 ; 28, 29), associées les unes aux autres dans la zone de joint,
b) dressage des ensembles (2, 3, 4) de sorte que les sections de tôle (13, 14 : 19, 20 ; 22, 23 ; 28, 29), associées les unes aux autres, soient contigües les unes aux autres dans la zone de joint,
c) Formage à froid d'au moins l'une des sections de tôle (13, 14 ; 19, 20 ; 22, 23 ; 28, 29) contigües les unes aux autres, ce formage à froid étant effectué dans une zone de joint, formée dans le canal d'accès (Z1) librement accessible de l'extérieur, de sorte que les sections de tôle (13, 14 ; 19, 20 ; 22, 23 ; 28, 29) soient reliées inséparablement ensemble par emboîtement et / ou par adhérence, après le formage à froid.

13. Procédé selon la revendication 12, **caractérisé en ce que**
- la phase de travail (a) comprend la formation d'une rainure de fixation (17, 18, 26, 27) dans une section de tôle de l'un des ensembles (2, 3, 4) et, sur l'autre ensemble (2, 3, 4), d'une section marginale (19a) en forme de bande en saillie libre, dont le tracé est adapté au tracé et à la forme de la rainure de fixation (17, 18, 26, 27),
- la phase de travail (b) comprend l'insertion de la section marginale (19a) du premier ensemble (2, 3, 4) dans la rainure de fixation (17, 18, 26, 27) du deuxième ensemble (2, 3, 4), et
- la phase de travail (c) comprend le pressage du matériau du deuxième ensemble (2, 3, 4), latéralement adjacent à la rainure de fixation (17, 18, 26, 27), contre la section marginale (19a) du premier ensemble (2, 3, 4), qui est insérée dans la rainure de fixation (17, 18, 26, 27), de sorte que les deux ensembles (2, 3, 4) soient reliés inséparablement ensemble, par adhérence et / ou par emboîtement, au moins sur des sections longitudinales déterminées de la rainure de fixation (17, 18, 26, 27).

14. Procédé selon la revendication 13, **caractérisé en ce que**, dans la phase de travail (c), les forces, nécessaires pour presser le matériau du deuxième ensemble préfabriqué (2, 3, 4) contre la section marginale du premier ensemble préfabriqué (2, 3, 4), sont appliquées au moyen de deux rouleaux de pression, déplacés le long de la rainure de fixation (17, 18, 26, 27), dont chacun est guidé respectivement sur l'un des côtés de la rainure de fixation (17, 18, 26, 27) et à faible distance de celle-ci.

15. Procédé selon la revendication 12, **caractérisé en ce que**, dans la phase de travail (c), le formage à froid est exécuté en tant que bordage.
